(19) Europäisches Patentamt

European Patent Office

Office européen des brevets

(11) **EP 1 014 544 A1**

(12) **EUROPÄISCHE PATENTANMELDUNG**

(43) Veröffentlichungstag:
    28.06.2000 Patentblatt 2000/26

(51) Int. Cl.⁷: **H02K 41/035**

(21) Anmeldenummer: **99125059.8**

(22) Anmeldetag: **15.12.1999**

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(30) Priorität: **23.12.1998 EP 98811269
            08.11.1999 EP 99811019**

(71) Anmelder: **Esec SA
    6330 Cham (CH)**

(72) Erfinder: **Burger, Markus
    6312 Steinhausen (CH)**

(74) Vertreter: **Falk, Urs, Dr.
    ESEC Management SA,
    Hinterbergstrasse 32,
    Postfach 5503
    6330 Cham (CH)**

(54) **Elektromagnetische Antriebsvorrichtung**

(57)     Bei einer elektromagnetischen Antriebsvorrichtung, die einen Stator (2) und eine ergiebige Spule (3) umfasst, ist die Spule (3) so ausgestaltet, dass die vom Stator (2) auf die Spule (3) ausgeübte Kraft (F) immer auf einen möglichst nahe beim Schwerpunkt (5) eines von der Antriebsvorrichtung angetriebenen Arbeitsorganes (1) liegenden Punkt P hin oder von diesem Punkt P weg gerichtet ist. Die Richtung der Kraft F ist somit abhängig von der Lage der Spule (3) bezüglich des Stators (2). Vorzugsweise umfasst die Spule (3) eine einzige Wicklung, deren Windungen (6) entlang konzentrischen Kreisbögen gewickelt sind, deren Zentrum mit dem Schwerpunkt (5) des Arbeitsorganes (1) zusammenfällt.

Solche Antriebsvorrichtungen eignen sich beispielsweise zum Antrieb des Bondkopfes eines Wire Bonders.

Fig.2

EP 1 014 544 A1

**Beschreibung**

Die Erfindung betrifft eine elektromagnetische Antriebsvorrichtung der im Oberbegriff des Anspruchs 1 genannten Art.

Solche Antriebsvorrichtungen werden vorteilhaft in Wire Bondern zur horizontalen Bewegung des Bondkopfes verwendet.

Eine elektromagnetische Antriebsvorrichtung der im Oberbegriff des Anspruchs 1 genannten Art ist aus der schweizerischen Patentschrift CH 678 907 bekannt. Die Antriebsvorrichtung dient beispielsweise der Horizontalbewegung des Bondkopfes eines Wire Bonders innerhalb eines vorbestimmten Arbeitsbereiches. Die Antriebsvorrichtung weist zwei feststehende Statoren auf, die mit je einer Spule zusammenwirken, so dass der mit den beiden Spulen fest verbundene Bondkopf innerhalb des Arbeitsbereiches bewegbar ist. Die von der Antriebsvorrichtung erzeugten Kräfte erzeugen insbesondere in den Randbereichen des Arbeitsbereiches grosse Momente, die einerseits die Lager des Bondkopfes belasten und andererseits unerwünschte Schwingungen des Bondkopfes bewirken.

Der Erfindung liegt die Aufgabe zugrunde, eine elektromagnetische Antriebsvorrichtung für den Einsatz auf einem Wire Bonder vorzuschlagen, bei der die oben genannten Nachteile behoben sind.

Die Erfindung besteht in den in den Ansprüchen 1 und 3 angegebenen Merkmalen. Vorteilhafte Ausgestaltungen ergeben sich aus den abhängigen Ansprüchen.

Die Erfindung löst die gestellte Aufgabe mittels einer elektromagnetischen Antriebsvorrichtung, die einen Stator und eine Spule umfasst, bei der die Spule so ausgestaltet ist, dass die vom Stator auf die Spule ausgeübte Kraft immer auf einen möglichst nahe beim Schwerpunkt des von der Antriebsvorrichtung angetriebenen Arbeitsorganes liegenden Punkt P hin oder von diesem Punkt P weg gerichtet ist.

Nachfolgend werden Ausführungsbeispiele der Erfindung anhand der Zeichnung näher erläutert.

Es zeigen:

Fig. 1   eine elektromagnetische Antriebsvorrichtung nach dem Stand der Technik,

Fig. 2   eine erfindungsgemässe elektromagnetische Antriebsvorrichtung,

Fig. 3   eine Spule,

Fig. 4-8   weitere Antriebsvorrichtungen, und

Fig. 9   eine weitere Spule.

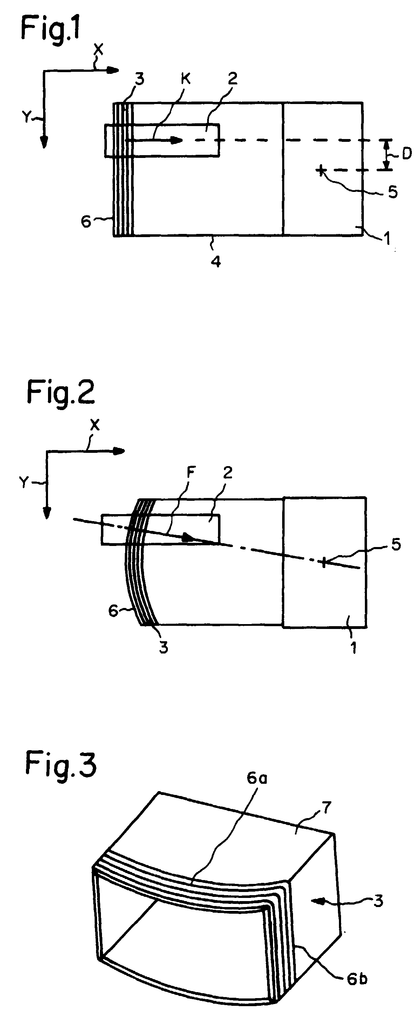

Die Fig. 1 zeigt in Draufsicht eine den Stand der Technik repräsentierende elektromagnetische Antriebsvorrichtung zur Bewegung eines Arbeitsorgans 1 auf einer Grundplatte in einer horizontalen xy-Ebene. Das Arbeitsorgan ist beispielsweise der Bondkopf eines Wire Bonders. Die Antriebsvorrichtung weist einen ortsfesten Stator 2 und eine mit dem Stator 2 berührungsfrei zusammenwirkende Spule 3 auf. Das Arbeitsorgan 1, das auf der Grundplatte gleitet, ist mit der Spule 3 über ein Trägerelement 4 fest verbunden. Die Antriebsvorrichtung ermöglicht eine computergesteuerte Verschiebung des Arbeitsorgans 1 in x-Richtung. Eine zweite, hier nicht dargestellte Antriebsvorrichtung ermöglicht die computergesteuerte Verschiebung des Arbeitsorgans 1 in y-Richtung. Die Spule 3 ist daher ergiebig (d.h. mit einem transversalen Freiheitsgrad) in y-Richtung ausgebildet, so dass sie im Stator 2 in y-Richtung verschiebbar ist. Wenn sich das Arbeitsorgan 1 in y-Richtung bewegt, dann bewegt sich dessen Schwerpunkt 5 in y-Richtung mit. Die Spule 3 ist in herkömmlicher Art gewickelt, d.h. die Windungen 6 verlaufen parallel zur y-Achse. Die vom Stator 2 auf die Spule 3 ausgeübte Kraft K ist daher immer in x-Richtung gerichtet. In der in der Fig. 1 beispielhaft gezeigten Position ist die Kraft K nicht zum Schwerpunkt 5 des Arbeitsorgans 4 gerichtet. Die Antriebsvorrichtung übt somit ein von der Grösse des Abstandes D abhängiges Moment auf das Arbeitsorgan 4 aus.

Die Fig. 2 zeigt in Draufsicht eine erfindungsgemässe elektromagnetische Antriebsvorrichtung zur Bewegung des Arbeitsorgans 1 auf der Grundplatte. Die Antriebsvorrichtung weist ebenfalls den ortsfesten Stator 2 und die mit dem Stator 2 berührungsfrei zusammenwirkende Spule 3 auf. Die Spule 3 ist wiederum in y-Richtung ergiebig ausgebildet, so dass sie im Stator 2 in y-Richtung verschiebbar ist. Die Windungen der Spule 3 sind nun nicht mehr parallel zur y-Achse, sondern bogenförmig bezüglich des Schwerpunktes 5 des Arbeitsorgans 1 gewickelt. Die vom Stator 2 auf die Spule 3 ausgeübte Kraft F ist daher, unabhängig von der momentanen Lage der Spule 3 relativ zum Stator 2, immer zum Schwerpunkt 5 des Arbeitsorgans 1 hin oder vom Schwerpunkt 5 weg gerichtet, so dass die Antriebsvorrichtung kein Moment auf das Arbeitsorgan 1 ausübt Mit anderen Worten: Die Richtung der Kraft F hängt ab von der y-Lage der Spule 3 bezüglich des Stators 2.

Der Stator 2 ist in an sich bekannter Ausführung beispielsweise E-förmig oder als Voice Coil Antrieb ausgebildet.

In der Fig. 3 ist die erfindungsgemässe Spule 3 in perspektivischer Darstellung gezeigt. Die Spule 3 umfasst einen Spulenkörper 7, auf den die Windungen 6 gewickelt sind. Die parallel zur xy-Ebene verlaufenden Teile 6a der Windungen 6 verlaufen bogenförmig, während die in der senkrecht zur xy-Ebene verlaufenden Teile 6b der Windungen 6 geradlinig sind. Damit die Kräfte $F_i$, die der Stator 2 auf jede einzelne Windung i ausübt, alle in die gleiche Richtung auf den Schwerpunkt 5 des mit der Spule 3 mechanisch fest verbundenen Arbeitsorgans 1 (Fig. 2) gerichtet sind, sind die parallel zur Grundplatte verlaufenden Teile der Windungen 6 entlang konzentrischer Kreisbogen angeordnet, wobei das Zentrum der Kreisbogen im Betrieb der Spule 3 mit dem Schwerpunkt 5 des Arbeitsorgans 1 zusammenfällt.

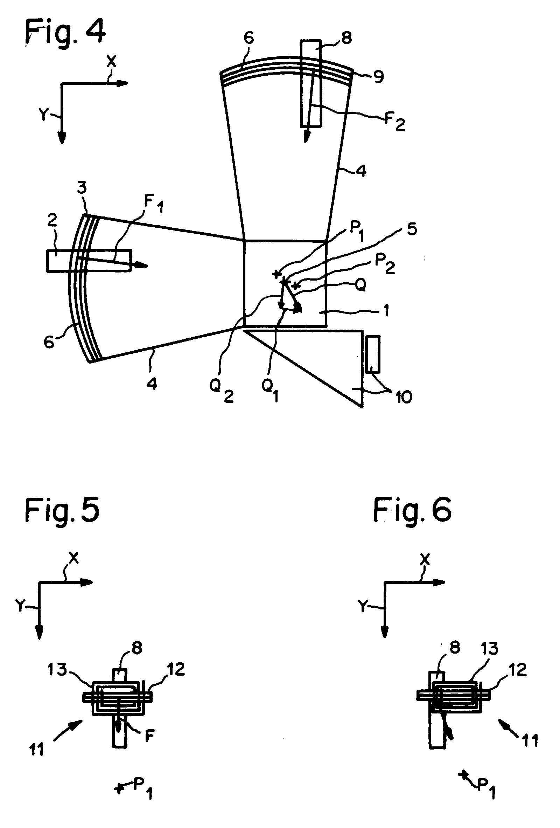

Die Fig. 4 zeigt eine elektromagnetische Antriebsvorrichtung zur computergesteuerten Bewegung des Arbeitsorgans 1 auf der Grundplatte, die den ersten Stator 2 und die mit dem ersten Stator 2 berührungsfrei zusammenwirkende erste Spule 3 sowie einen zweiten Stator 8 und eine mit dem zweiten Stator 8 berührungsfrei zusammenwirkende zweite Spule 9 aufweist. Die beiden Spulen 3, 9 sind mit dem auf der Grundplatte gleitenden Arbeitsorgan 1 durch je ein Trägerelement 4 fest verbunden. Die Windungen 6 beider Spulen 3, 9 sind bogenförmig, oder wenigstens annähernd bogenförmig, gewickelt. Zur Führung des Arbeitsorgans 1 ist ein an sich bekanntes Winkellager 10 vorgesehen. Das Winkellager 10 sorgt dafür, dass das Arbeitsorgan 1 bezüglich der x-Achse und der y-Achse immer gleich orientiert ist. Das Winkellager 10 ist vorzugsweise ein mit Vakuum vorgespanntes Luftlager.

Die vom ersten Stator 2 auf die erste Spule 3 ausgeübte Kraft $F_1$ greift an demjenigen Teil der Windungen 6 der Spule 3 an, der sich innerhalb des vom Stator 2 erzeugten Magnetfeldes befindet, und ist zu einem ersten Punkt $P_1$ hin oder vom ersten Punkt $P_1$ weg gerichtet. Die vom zweiten Stator 8 auf die zweite Spule 9 ausgeübte Kraft $F_2$ ist analog zu einem zweiten Punkt $P_2$ hin oder vom zweiten Punkt $P_2$ weg gerichtet. Ideal wäre, dass die Punkte $P_1$, $P_2$ und der Schwerpunkt 5 des Arbeitsorgans 1 zusammenfallen. In der Praxis kann es aber sein, dass dem nicht so ist. Trotzdem ist eine markante Verkleinerung der auf das Arbeitsorgan 1 ausgeübten Momente im Vergleich zu Lösungen mit herkömmlichen, geradlinig gewickelten Spulen erzielbar, wenn die Punkte $P_1$, $P_2$ nahe beim Schwerpunkt 5 des Arbeitsorgans 1 liegen. Nahe bedeutet hier, dass die Entfernungen der Punkte $P_1$, $P_2$ zum Schwerpunkt des Arbeitsorgans 1 klein sind im Vergleich zu den maximalen Bewegungen des Arbeitsorgans 1.

Da die Kräfte $F_1$ und $F_2$ nahezu am Schwerpunkt 5 des Arbeitsorgans 1 angreifen, sind die von ihnen auf das Arbeitsorgan 1 ausgeübten Drehmomente bedeutend kleiner als beim Stand der Technik. Dadurch verkleinert sich auch die Belastung des Winkellagers 10. Weiter hat die markante Verkleinerung der Drehmomente zur Folge, dass das Gesamtsystem weniger stark zum Schwingen neigt. Bei vorgegebener Maximalbelastung des Winkellagers 10 können daher die das Arbeitsorgan 1 antreibenden Kräfte $F_1$ und $F_2$ erhöht und damit kürzere Bewegungszeiten erzielt werden. Zudem können an eine Bewegungsphase anschliessende Wartezeiten, die dazu dienen, bei der Bewegung angeregte Schwingungen abklingen zu lassen, verkürzt werden. Die gleichen Vorteile ergeben sich auch, wenn anstelle des Winkellagers 10 ein in x- und y-Richtung spielfrei beweglicher Tisch verwendet wird, auf dem das Arbeitsorgan 1 befestigt ist.

Bei der Steuerung der durch die Spulen 3, 9 fliessenden Ströme muss berücksichtigt werden, dass die von den Statoren 2, 8 auf die beiden Spulen 3 bzw. 9 ausgeübten Kräfte $F_1$ bzw. $F_2$ in Richtung auf die nahe beim Schwerpunkt 5 des beweglichen Arbeitsorgans 1 liegenden Punkte $P_1$ bzw. $P_2$ hin oder von diesen weg gerichtet sind, d.h. die Richtungen der Kräfte $F_1$ und $F_2$ sind abhängig von der momentanen Lage der Spulen 3, 9. Die Kraft $F_1$ ist daher, ausser in einer Speziallage, nicht parallel zur x-Achse. Auch bei einer Bewegung in x-Richtung allein müssen somit beide Spulen 3, 9 angetrieben werden.

Es hat sich gezeigt, dass die Kraft $F_1$ innerhalb des zulässigen Arbeitsbereiches in der xy-Ebene dargestellt werden kann als:

$$F_1 = F_{1x} + F_{1y}(y(P_1)),$$

wobei $F_{1x}$ die Komponente der Kraft $F_1$ in x-Richtung, $F_{1y}$ die Komponente der Kraft $F_1$ in y-Richtung und $y(P_1)$ die y-Koordinate des Punktes $P_1$ bezüglich der Grundplatte bezeichnen. Die absolute Stärke der Kraft $F_1$ hängt natürlich vom Strom ab, der durch die Spule 3 fliesst. Die Komponente $F_{1y}$ ist eine annähernd lineare Funktion der y-Koordinate des Punktes $P_1$. Die Komponente $F_{1x}$ hingegen ist konstant. Analog gilt für die Kraft $F_2$:

$$F_2 = F_{2x}(x(P_2)) + F_{2y},$$

Die exakte Lage des Arbeitsorgans 1 ist über ein Messsystem, z.B. über ein direkt in die Grundplatte eingeritztes Kreuzgitter, erfassbar. Ist die momentane Lage des Arbeitsorgans 1 gegenüber der Grundplatte bekannt, dann ist auch die momentane Lage der Punkte $P_1$ und $P_2$ bekannt. Die Richtungen der Kräfte $F_1$ und $F_2$ in Funktion der Lage des Punktes $P_1$ bzw. $P_2$ bzw. des Arbeitsorganes 1 sind daher mittels obiger Gleichungen bestimmbar. Um das Arbeitsorgan 1 von einem Ort A zu einem Ort B zu verschieben, hat sich das gemäss den folgenden Schritten ablaufende Verfahren bewährt:

1. Bestimmung des Verschiebevektors Q, der von der momentanen Position A des Arbeitsorgans 1 zur neuen Position B zeigt;
2. Bestimmung der Richtungen der Kräfte $F_1$ und $F_2$ aufgrund der momentanen Position A des Arbeitsorgans 1 bzw. der daraus abgeleiteten Positionen der Punkte $P_1$ und $P_2$;
3. Darstellung des Verschiebevektors Q als Summe von zwei Vektoren $Q_1$ und $Q_2$, wobei der erste Vektor $Q_1$ in Richtung der Kraft $F_1$ und der zweite Vektor $Q_2$ in Richtung der Kraft $F_2$ zeigt;
4. Beaufschlagung der beiden Spulen 3, 9 mit je einem der Kraft $F_1$ bzw. $F_2$ entsprechenden Strom $I_1$ bzw. $I_2$, wobei das Verhältnis der Ströme $I_1$ und $I_2$ sich entsprechend dem Verhältnis der Beträge der Vektoren $Q_1$ und $Q_2$ bemisst;
5. Erfassen der neuen Lage des Arbeitsorgans 1 nach einer vorbestimmten Zyklusdauer Δt;

6. Neubestimmung des Verschiebevektors Q und Neubestimmung der Richtungen der Kräfte $F_1$ und $F_2$ aufgrund der inzwischen erreichten Position des Arbeitsorgans 1;

7. Darstellung des Verschiebevektors Q als Summe von zwei neuen Vektoren $Q_1$ und $Q_2$, wobei der erste Vektor $Q_1$ in Richtung der neu ermittelten Kraft $F_1$ und der zweite Vektor $Q_2$ in Richtung der neu ermittelten Kraft $F_2$ zeigt;

8. Beaufschlagung der beiden Spulen 3, 9 mit je einem den Vektoren $Q_1$ bzw. $Q_2$ entsprechenden Strom;

Die Schritte 5 - 8 werden wiederholt, bis das Arbeitsorgan die neue Position B erreicht hat. Die Zyklusdauer Δt beträgt bei einem Wire Bonder, bei dem das Arbeitsorgan 1 den Bondkopf trägt, typischerweise einige zehn bis hundert Mikrosekunden.

Die Fig. 5 zeigt eine weitere Spule 11, die zwei Wicklungen 12, 13 aufweist, die elektrisch entweder in Reihe geschaltet sind oder einzeln angesteuert werden können. Aus Gründen der zeichnerischen Klarheit ist die Figur nur schematisch und nicht massstabsgetreu gezeichnet. Die Windungen der Wicklung 12 verlaufen wie bei der in der Fig. 1 zitierten herkömmlichen Spule 3 parallel zur xz-Ebene, wobei die Richtung z senkrecht zur xy-Ebene verläuft. Die Windungen der Wicklung 13 verlaufen parallel zur xy-Ebene. Befindet sich die Spule 11 bezüglich des Stators 8 in der in der Fig. 5 gezeigten Mittellage, dann befinden sich die parallel zur y-Achse verlaufenden Teile der Windungen der Wicklung 13 ausserhalb des Stators 8, so dass der Stator 8 keine Kraft in x-Richtung auf die Spule 11 ausüben kann. Befindet sich die Spule 11, wie in der Fig. 6 dargestellt, in x-Richtung ausserhalb der Mittellage, dann befinden sich einige der parallel zur y-Achse verlaufenden Teile der Windungen der Wicklung 13 innerhalb des Stators 8, so dass der Stator 8 auch eine Kraft in x-Richtung auf die Spule 11 ausübt. Mit zunehmender Entfernung der Spule 11 von der Mittellage nimmt die Zahl der massgebenden Teile der Windungen der Wicklung 13 innerhalb des Stators 8 zu. In der Folge nimmt die in x-Richtung wirkende Kraft mit zunehmender Entfernung der Spule 11 von der Mittellage zu, so dass die insgesamt vom Stator 8 auf die Spule 11 ausgeübte Kraft immer auf einen sich mit der Spule 11 verschiebenden, vorbestimmten Punkt $P_1$ hin oder von diesem Punkt $P_1$ weg gerichtet ist.

Falls die Wicklungen 12 und 13 elektrisch unabhängig betrieben werden, dann lässt sich die Richtung der auf die Spule 11 ausgeübten Kraft F unter Berücksichtigung der Lage der Spule 11 computergesteuert variieren.

Die bogenförmig gewickelte Spule 3 (Fig. 3) weist gegenüber dieser mit zwei Wicklungen ausgebildeten Spule den Vorteil des bezogen auf den Wirkungsgrad geringeren Gewichtes auf.

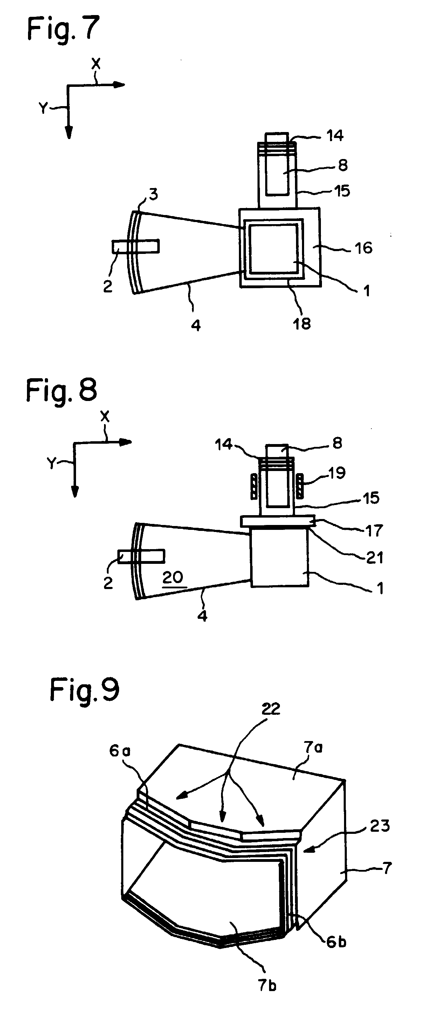

Eine Antriebsvorrichtung zur Bewegung des Arbeitsorgans 1 in einer horizontalen xy-Ebene lässt sich auch auf die in den Figuren 7 und 8 dargestellten Arten realisieren, bei denen nur die Spule 3 ergiebig, nämlich ergiebig in y-Richtung, ausgebildet ist. Für den Antrieb in y-Richtung dient eine mit dem Stator 8 zusammenwirkende Spule 14, die in x-Richtung nicht ergiebig ausgebildet ist. Die Spule 14 ist über einen Steg 15 fest mit einem auf der Grundplatte nur in y-Richtung beweglichen ersten Tisch 16 (Fig. 7) bzw. mit einem als Luftlager ausgebildeten Lagerelement 17 (Fig. 8) verbunden. Der Steg 15 ist von einem seitlich neben dem Stator 8 angeordneten Führungselement 19 geführt, damit das Lagerelement 17 nur in y-Richtung beweglich ist. Für den Antrieb in x-Richtung dient die aus dem Stator 2 und der Spule 3 gebildete elektromagnetische Vorrichtung 20, bei der die vom Stator 2 auf die Spule 3 ausgeübte Kraft F immer annähernd zum Schwerpunkt des Arbeitsorgans 1 hin oder von diesem weg zeigt. Bei der in der Fig. 7 gezeigten Lösung ist die Spule 3 mit einem zweiten Tisch 18 verbunden, der das Arbeitsorgan 1 trägt. Der Tisch 18 ist auf dem ersten Tisch 16 gelagert und bezüglich des ersten Tisches 16 nur in x-Richtung verschiebbar. Bei der in der Fig. 8 gezeigten Lösung ist die Spule 3 über das Trägerelement 4 mit dem Arbeitsorgan 1 verbunden, wobei das Arbeitsorgan 1 (und damit auch die Spule 3) der Bewegung des Lagerelementes 17 in y-Richtung folgt und entlang der Frontfläche 21 des Lagerelementes 17 in x-Richtung gleiten kann. Die Spule 3 macht die Bewegung des Arbeitsorganes 1 in y-Richtung mit, weshalb sie ja in y-Richtung ergiebig sein muss.

Die Fig. 9 zeigt in perspektivischer Ansicht eine Spule 3, bei der die Windungen 6 nicht bogenförmig, sondern durch gerade Teilstücke 22 angenähert bogenförmig gewickelt sind. Der bogenförmige Teil der Windungen 6 kann durch nur zwei, aber auch durch eine grössere Anzahl von geraden Teilstücken 22 gebildet sein. Die gezeigte Spule 3 weist drei gerade Teilstücke 22 auf. Die Breite des Stators 2 ist so bemessen, dass sich in jeder Lage der Spule 3 mindestens zwei benachbarte Teilstücke je mindestens teilweise innerhalb des Stators befinden. Die obere und untere Fläche 7a bzw. 7b des Spulenkörpers 7, die parallel zur Grundplatte sind, sind vorzugsweise so dick wie die Windungen 6, damit der Schlitz im Stator so schmal wie möglich gehalten werden kann. In der Fig. 9 ist aus Gründen der zeichnerischen Klarheit nur eine einzige Lage der Windungen gezeichnet. Die Windungen 6 werden nach dem Wickeln beispielsweise mit einem glasfaserverstärkten Epoxykleber zusammengeklebt.

**Patentansprüche**

1. Elektromagnetische Antriebsvorrichtung zur Bewegung eines Arbeitsorgans (1) in einer Ebene, mit einem Stator (2) und einer mit dem Stator (2) berührungsfrei zusammenwirkenden Spule (3), **dadurch gekennzeichnet, dass** die parallel zur Ebene verlaufenden Teile der Windungen (6a) der Spule (3) bogenförmig oder entlang geraden Teilstücken (22) angenähert bogenförmig verlaufen.

2. Antriebsvorrichtung nach Anspruch 1, **dadurch gekennzeichnet,** dass die parallel zur Ebene verlaufenden Teile der Windungen (6a) der Spule (3) konzentrisch angeordnet sind.

3. Elektromagnetische Antriebsvorrichtung zur Bewegung eines Arbeitsorgans (1) in einer Ebene, mit einem Stator (2) und einer mit dem Stator (2) berührungsfrei zusammenwirkenden Spule (11), **dadurch gekennzeichnet, dass** die Spule (11) zwei Wicklungen (12, 13) aufweist und dass die parallel zur Ebene verlaufenden Teile der Windungen der Wicklungen (12, 13) annähernd orthogonal zueinander verlaufen.

4. Antriebsvorrichtung nach Anspruch 3, **dadurch gekennzeichnet, dass** die Wicklungen (12, 13) elektrisch getrennt sind.

5. Wire Bonder mit mindestens einer Antriebsvorrichtung nach einem der vorhergehenden Ansprüche 1 bis 4.

# Fig.1

# Fig.2

# Fig.3

EP 1 014 544 A1

Fig. 4

Fig. 5

Fig. 6

7

Fig. 7

Fig. 8

Fig. 9

Europäisches
Patentamt

# EUROPÄISCHER RECHERCHENBERICHT

Nummer der Anmeldung

EP 99 12 5059

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | CH 678 907 A (ESEC SA) 15. November 1991 (1991-11-15) --- | | H02K41/035 |
| A | EP 0 529 987 A (HITACHI METALS LTD) 3. März 1993 (1993-03-03) --- | | |
| A | EP 0 421 029 A (CONTRAVES GOERZ CORP) 10. April 1991 (1991-04-10) --- | | |
| A | US 5 012 372 A (ISOMURA AKIHIRO ET AL) 30. April 1991 (1991-04-30) ----- | | |

|  |  |
|---|---|
| | RECHERCHIERTE SACHGEBIETE (Int.Cl.7) |
| | H02K |

Der vorliegende Recherchenbericht wurde für alle Patentansprüche erstellt

| Recherchenort | Abschlußdatum der Recherche | Prüfer |
|---|---|---|
| DEN HAAG | 30. März 2000 | Ramos, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 12 5059

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-03-2000

| Im Recherchenbericht angeführtes Patentdokument | Datum der Veröffentlichung | Mitglied(er) der Patentfamilie | Datum der Veröffentlichung |
|---|---|---|---|
| CH 678907 A | 15-11-1991 | KEINE | |
| EP 0529987 A | 03-03-1993 | US 5295031 A<br>DE 69227658 D<br>DE 69227658 T<br>JP 5257534 A<br>US 5523911 A | 15-03-1994<br>07-01-1999<br>22-07-1999<br>08-10-1993<br>04-06-1996 |
| EP 0421029 A | 10-04-1991 | US 4908558 A | 13-03-1990 |
| US 5012372 A | 30-04-1991 | JP 1202144 A | 15-08-1989 |

EPO FORM P0461

Für nähere Einzelheiten zu diesem Anhang : siehe Amtsblatt des Europäischen Patentamts, Nr.12/82